# EUROPÄISCHE PATENTSCHRIFT

(11) **EP 0 642 068 B1**
(45) Veröffentlichungstag und Bekanntmachung des Hinweises auf die Patenterteilung: **21.10.1998**
(21) Anmeldenummer: 94113923.0
(22) Anmeldetag: 05.09.1994
(51) Int. Cl.: G05D 16/20, G05D 16/16, G05D 16/10, G05D 16/04, F16K 31/40, F15B 13/042, F15B 13/043

(54) **Vorgesteuertes Hydraulikventil**
Pilot operated hydraulic valve
Vanne hydraulique servocommandée

(30) Priorität: 06.09.1993 DE 4330073
(43) Veröffentlichungstag der Anmeldung: 08.03.1995
(73) Patentinhaber: HYDROTECHNIK FRUTIGEN AG, CH-3714 Frutigen (CH)
(72) Erfinder: Pieren, Heinz, CH-3654 Gunten (CH)
(74) Vertreter: Fiedler, Otto Karl, Dipl.-Ing.

(56) Entgegenhaltungen:
- DE-A-19 501 662
- US-A- 5 195 556
- US-A- 5 290 007
- US-A- 5 445 188

## Beschreibung

Die Erfindung betrifft ein vorgesteuertes Hydraulikventil, insbesondere ausgebildet als Druckentlastungs- und Druckbegrenzungsventil, gemäss den Merkmalen des Oberbegriffs des Patentanspruchs 1.

Druckentlastungsventile, d.h. Ventile, die ein Umschalten des Druckes in einem Hydrauliksystem zwischen einem Arbeitsdruck und einem niedrigeren Umlaufdruck ermöglichen, sind in verschiedenen Ausführungen bekannt, insbesondere auch in Form von kombinierten Entlastungs- und Druckbegrenzungsventilen (siehe z.B. die Firmendruckschrift D-6.4 "Elektr. betätigte Druckbegrenzungs- und Druckminder-Patronen NG10" der Firma Hydrotechnik Frutigen AG, 30.04.1998). Bei diesen bekannten Ventilen ist ein Hauptventil mit einer relativ starken, in Schliessrichtung wirkenden Rückstell-Vorspannung vorgesehen, um Funktionsstörungen, insbesondere bei höheren Arbeitsdrücken und grösseren Durchflüssen, zu vermeiden. Diese hohe Schliess-oder Rückstell-Vorspannung hat allerdings im entlasteten Zustand des Ventils einen entsprechend hohen Umlaufdruck zur Folge, der bei den bekannten Ventilen bei ca. 4 bis 8 bar liegt.

Aufgabe der Erfindung ist daher die Schaffung eines Ventils der eingangs genannten Art, das sich durch einen niedrigen Umlaufdruck bei trotzdem hoher Betriebssicherheit auch für höhere Arbeitsdrücke und grössere Durchflüsse auszeichnet.

Die erfindungsgemässe Lösung dieser Aufgabe ist bestimmt durch die Merkmale des Patentanspruchs 1. Diese Lösung geht aus von dem Grundgedanken, die Rückstell-Vorspannung des Hauptventils in Abhängigkeit vom Arbeitsdruck- bzw. Umlaufdruck-Betriebszustand und den entsprechenden Stellungen des Vorsteuerventils selbsttätig zwischen einem höheren und einem niedrigeren Wert umzusteuern. Für das erfindungsgemässe Ventil bedeutet dies, dass die Entlastungsvorrichtung zum Umschalten vom Arbeitsdruck auf Umlaufdruck durch das Vorsteuerventil aus einer deaktivierten Stellung in eine aktivierte Stellung mit verminderter Wirkung des Rückstellgliedes auf das Hauptventil umgesteuert wird und umgekehrt.

Im Hinblick auf eine besonders einfache, robuste und betriebssichere Konstruktion ist es für eine Realisierung der Erfindung als Entlastungsventil vorteilhaft, das Vorsteuerventil zwischen einer dem Umlaufdruck-Betriebszustand zugeordneten ersten Stellung vorzugsweise einer festen Offenstellung, mit aktivierter Entlastungsvorrichung und einer dem Arbeitsdruck-Betriebszustand zugeordneten zweiten Stellung, vorzugsweise einer festen Schliesstellung, mit deaktivierter Entlastungsvorrichtung umsteuerbar auszubilden.

In sinngemässer Weiterbildung ist für ein Druckentlastungsund Druckbegrenzungsventil eine Ausführung mit folgenden Merkmalen vorteilhaft: Das Vorsteuerventil ist auch hier zwischen einem ersten Betriebszustand mit aktivierter Entlastungsvorrichtung und einem zweiten Betriebszustand mit deaktivierter Entlastungsvorrichtung umsteuerbar ausgebildet. Dabei ist der erste Betriebszustand wieder einer Herabsetzung des Ventileingangsdrucks auf einen niedrigen Umlaufdruckwert zugeordnet, der zweite Betriebszustand nunmehr jedoch einer laufend wirksamen Begrenzungsregelung des Ventileingangsdrucks auf einen vorgebbaren Arbeitsdruckwert. Weiterhin ist für das Vorsteuerventil ein gemäss vorgebbaren Begrenzungs-Ansprechwerten des Ventileingangsdrucks einstellbares Vorspannglied vorgesehen. Endlich ist im zweiten Betriebszustand der Oeffnungsgrad des Vorsteuerventils durch den Ventileingangsdruck im Verhältnis zum Begrenzungs-Ansprechwert bestimmt.

Die Erfindung wird weiter anhand der in den Zeichnungen dargestellten Ausführungsbeispiele erläutert. Hierin zeigt:
- Fig.1: einen Axialschnitt eines erfindungsgemässen Druckentlastungsventils in Patronenbauform,
- Fig.1a: eine Einzelheit innerhalb des Ventils gemäss Fig.1 in grösserem Massstab,
- Fig.2: einen zentralen Teil des Ventils nach Fig.1, wiederum in grösserem Massstab, jedoch im Arbeitsdruck-Betriebszustand,
- Fig.3: einen Axialschnitt eines erfindungsgemässen Druckentlastungs- und Druckbegrenzungsventils, ebenfalls in Patronenbauform, und
- Fig.4: einen zentralen Teil des Ventils nach Fig.3, jedoch in grösserem Massstab und im Betriebszustand mit Begrenzungsregelung des Ventileingangsdrucks.

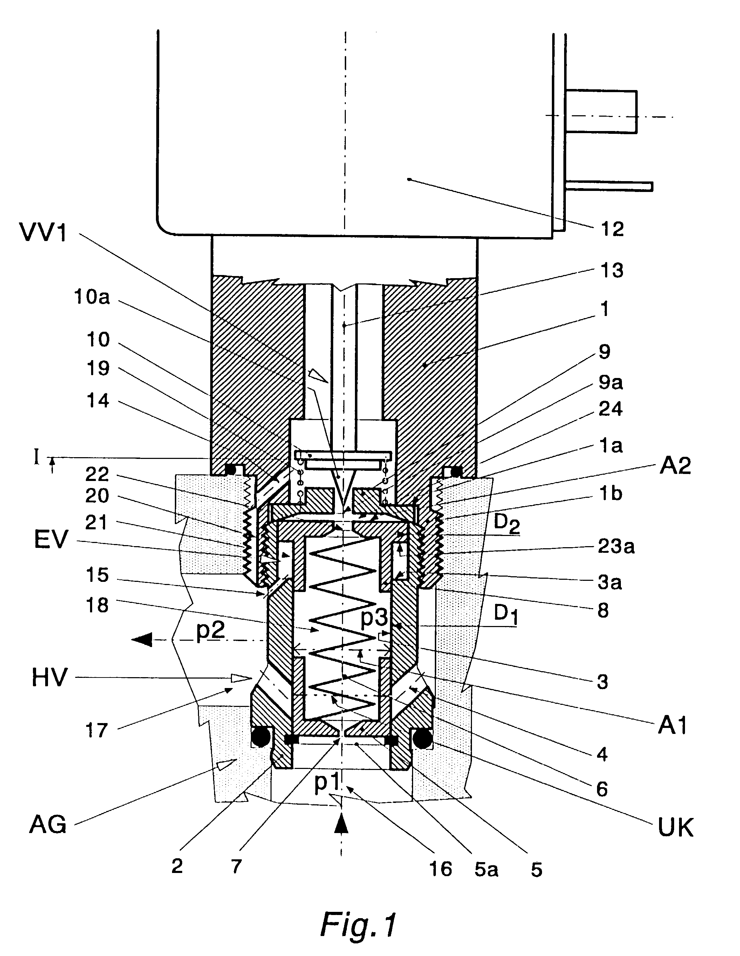

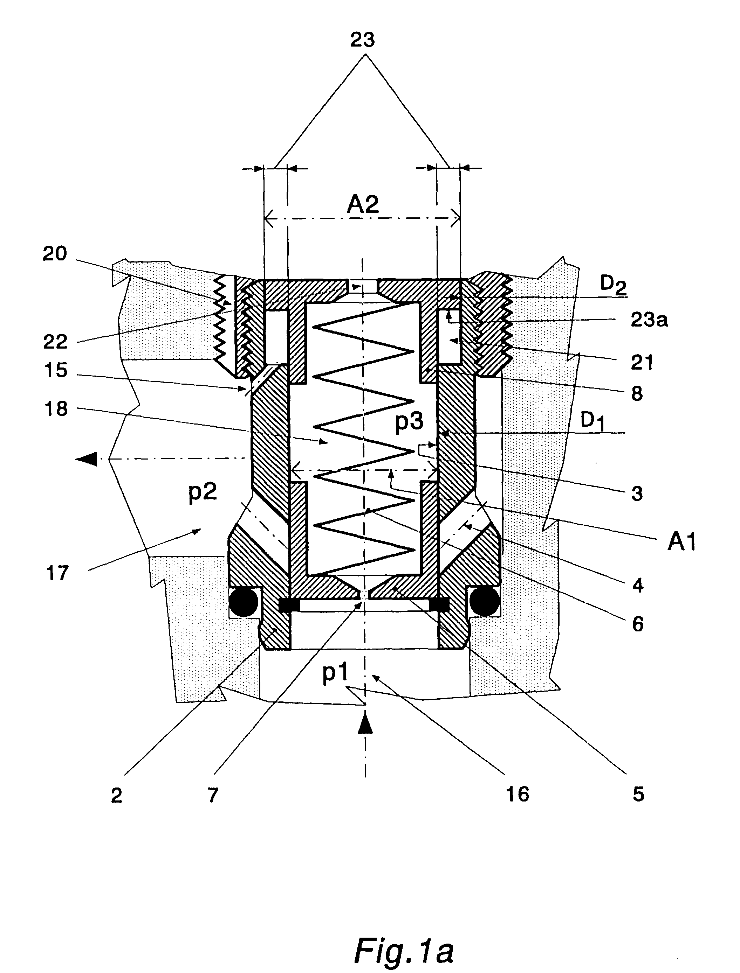

Zunächst die Bestandteile des Druckentlastungsventils nach Fig.1 und ihre Funktion im Ueberblick:
Das Ventil umfasst einen Ventilkörper 1 mit einem Gewinde la, in das eine Ventilbüchse 2 mit Stufenbohrung 3 und Querbohrungen 4 eingeschraubt ist. Auf diese Weise ist eine Ventilpatrone gegeben, die mit einem Gewindeansatz 1b in eine entsprechende Bohrung eines hier nicht näher interessierenden, nur teilweise angedeuteten Anschlussgehäuses AG eingeschraubt ist. Im Anschlussgehäuse befinden sich eine Eingangsleitung 16 mit Eingangsdruck p1 und eine Ausgangsleitung 17 mit Ausgangsdruck p2. Der Hauptströmungsweg von der Eingangsleitung zur Ausgangsleitung ist mit Pfeilen angedeutet.

Im unteren Bereich der Ventilbüchse mit dem Stufenbohrungsbereich kleineren Durchmessers D1 befindet sich ein Hauptventil HV mit einem schieberförmigen Hauptventilglied 5 und einem als Schraubendruckfeder ausgebildeten Hauptventil-Rückstellglied 6. Die Kolbenfläche A1 des Hauptventilgliedes 5 entspricht dem kleineren Stufenbohrungsdurchmesser D1 und ist in Fig.1 strichpunktiert markiert. An der Oberseite des Hauptventilgliedes 5 bildet der Stufenbohrungsbereich mit Durchmesser D1 einen Steuerdruckraum 18 mit darin herrschendem Steuerdruck p3. Ueber eine düsenartig ausgebildete Bypassdrossel 7 im Hauptventilglied 5 steht der Steuerdruckraum 18 mit der Eingangsleitung 16 in Verbindung. Der jeweilige Wert des Steuerdrucks p3 entspricht daher dem um den Druckabfall in der Drossel 7 verminderten Eingangsdruck p1. Die hierfür massgebenden Strömungsverhältnisse im Ventil werden im Zusammenhang mit dessen Gesamtfunktion weiter unten im einzelnen erläutert.

Das Hauptventilglied 5 wird vom Rückstellglied 6 in Richtung gegen einen Anschlagring 5a beaufschlagt und findet an diesem unter Verschluss der Querbohrungen 4 und Unterbrechung des Durchflusses zwischen Ventileingang und Ventilausgang seine in Fig.1 angedeutete Ruhestellung. Das Hauptventilglied 5 nimmt diese Ruhestellung solange ein, wie die von der Druckdifferenz p1 - p3 auf die Kolbenfläche A1 ausgeübte Axialkraft die im jeweiligen Betriebszustand wirksame Kraft des Rückstellgliedes 6 unterschreitet. Der Durchfluss wird freigegeben, wenn das Hauptventilglied 5 durch eine entsprechende Druckdifferenz mit seiner Unterkante UK (ebenfalls strichpunktiert angedeutet) in den Bereich der inneren Querbohrungsmündungen oder über diese hinaus verschoben wird.

Im oberen Teil des Ventilkörpers 1 befindet sich ein insgesamt mit VV1 bezeichnetes Vorsteuerventil, das von einem am oberen Ende des Ventilkörpers aufgesetzten Elektromagneten 12 über einen Stössel 13 angesteuert wird. Das Vorsteuerventil VV1 umfasst ein mit einem Ventilkegel 10a versehenes Vorsteuer-Ventilglied 10, das mit dem Stössel 13 des Elektromagneten 12 fest verbunden ist, sowie einen Ventilsitzkörper 9, mit dessen Ventilbohrung 9a der Ventilkegel 10a zusammenwirkt. Bei ausgeschaltetem Elektromagneten 12 nimmt das Ventilglied 10 unter der Wirkung einer Entlastungsfeder 19 die in Fig.1 dargestellte, angehobene Stellung I ein, d.i. im Beispiel eine feste Offenstellung bezüglich der Ventilbohrung 9a. Beim Anziehen des Elektromagneten 12 wird das Ventilglied 10 über den Stössel 13 gegen den Ventilsitzkörper 9 gedrückt und die Ventilbohrung 9a damit verschlossen. Der Fluidraum oberhalb des Vorsteuerventils VV1 liegt über eine Ablaufbohrung 14 und eine anschliessende Längsnut 20 im Gewindeansatz 1b des Ventilkörpers 1 im wesentlichen auf Ventilausgangsdruck p2.

Unterhalb des Vorsteuerventils VV1 befindet sich eine insgesamt mit EV bezeichnete Entlastungsvorrichtung. Diese umfasst einen Steuerkolben 8, der als Differentialkolben ausgebildet und mit zwei voneinander abgesetzten Abschnitten mit dem Durchmesser D1 bzw. D2 in der Stufenbohrung 3 der Ventilhülse 2 gelagert ist. Das als Schraubendruckfeder ausgebildete Hauptventil-Rückstellglied 6 stützt sich zwischen dem Hauptventilglied 5 und dem Steuerkolben 8 ab, wirkt also in Richtung einer Abstandsvergrösserung. Bei Verschiebung nach oben findet der Steuerkolben seine Endlage durch Anlage an der Unterseite des Ventilsitzkörpers 9, bei Verschiebung nach unten an einer Schulter 3a der Stufenbohrung 3.

Der Steuerkolben 8 liegt mit seiner unteren Kolbenfläche, die der Kolbenfläche A1 des Hauptventilgliedes entspricht, im Steuerdruckraum 18, während die obere, wieder strichpunktiert markierte Kolbenfläche A2 des Steuerkolbens im Abschnitt der Stufenbohrung mit dem Durchmesser D2 liegt und mit dem Ventilsitzkörper 9 einen Zwischenraum 24 begrenzt. Ein Durchlass 22 von im Vergleich zur Drossel 7 wesentlich grösserem Querschnitt verbindet Steuerdruckraum 18 und Zwischenraum 24. Oberseite und Unterseite des Steuerkolbens 8 stehen daher immer unter gleichem Druck, nämlich dem Steuerdruck p3. Die resultierende Wirkfläche 23 des Steuerkolbens 8 entspricht der Differenz A2 - Al. Sie ist in Fig.la durch ihre Radialabmessungen angedeutet. Die untenliegende Rückseite 23a der Wirkfläche begrenzt einen Entlastungsraum 21, der über eine Entlastungsbohrung 15 mit der Ventilausgangsseite 17 verbunden ist und somit immer im wesentlichen auf dem im allgemeinen vernachlässigbar niedrigen Ventilausgangsdruck p2 liegt. Die Resultierende der auf den Steuerkolben wirkenden Fluid-Druckkräfte ist also Prs = p3 x (A2 - A1). Ihr entgegen wirkt die Kraft Phv des Hauptventil-Rückstellgliedes 6. Die jeweils aktuelle Verschiebungsrichtung des Steuerkolbens ist also durch das Vorzeichen der resultierenden Differenzkraft Pd = Phv - Prs bestimmt. Positives Pd bedeutet in Bezug auf Fig.1 Verschiebung nach oben, d.h. Aktivierung der Entlastungsvorrichtung mit Verminderung der Hauptventilvorspannung, negatives Pd Verschiebung nach unten, d.h. Deaktivierung der Entlastungsvorrichtung mit Erhöhung der Hauptventilvorspannung.

Die Gesamtfunktion des Entlastungsventils stellt sich unter Bezugnahme auf die Figuren 1, la und 2 wie folgt dar:

Das Ventil ist in Fig.1 im unbetätigten Zustand dargestellt. Ansonsten ist das Hauptventilglied 5 bei Mengen-Umlauf mehr oder weniger weit geöffnet, wie in Fig.1 durch eine strichpunktierte Lage der Unterkante UK des Hauptventilgliedes angedeutet ist.

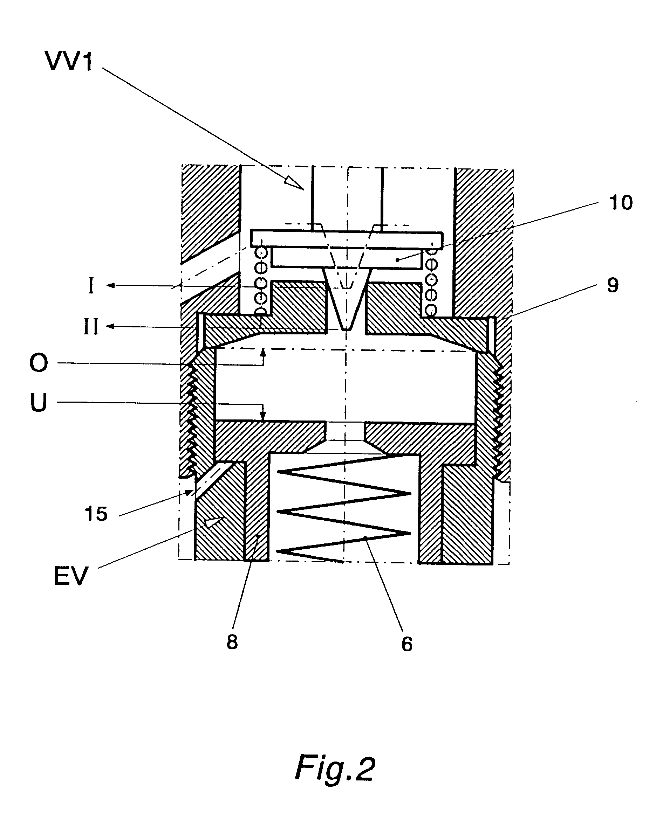

Das Vorsteuerventil VV1 nimmt gemäss Fig.1 seine feste Offenstellung I mit voll freigegebener Ventilbohrung 9a ein. Der Steuerdruck p3 ist dabei bestimmt durch die Zuströmung vom Ventileingang 16 über die Bypassdrossel 7 in den Steuerdruckraum 18 und die Abströmung aus diesem über das Vorsteuerventil zum Ventilausgang 17. Die Querschnitte der Ventilbohrung 9a und des Durchlasses 22 sind im Verhältnis zu demjenigen der Bypassdrossel 7 im Hauptventilglied 5 so bemessen, dass im vorliegenden Betriebszustand p3 annähernd auf p2 abfällt und praktisch das gesamte Druckgefälle p1 - p2 an der Drossel 7 liegt. Weiterhin sind die Stützkraft und Steifheit des Hauptventil-Rückstellgliedes 6 einerseits und die Wirkfläche A2 - A1 des Steuerkolbens 8 so bemessen, dass Phv mit Sicherheit grösser als Prs = p3 x (A2 - A1) ist, d.h. Pd = Phv - Prs wird positiv. Der Steuerkolben geht also in seine obere Endlage O und entspannt das Rückstellglied 6 auf die gewünschte, geringe Schliessvorspannung des Hauptventilgliedes 5 mit entsprechend niedrigem Umlaufdruck. Mit Anziehen des Elektromagneten 12 zum Arbeitsdruck-Betriebszustand nimmt das Vorsteuerventil VV1 seine in Fig.2 angedeutete, feste Schliessstellung II ein, so dass die Abströmung aus dem Steuerdruckraum 18 unterbrochen ist und der Steuerdruck p3 durch Druckausgleich über die Bypassdrossel 7 auf den Ventileingangsdruck p1 ansteigt. Prs = p3 x (A2 - A1) nimmt damit einen Wert an, der jedenfalls wesentlich höher ist als der Maximalwert der Stützkraft Phv des Hauptventil-Rückstellgliedes 6. Pd wird also in jedem Fall negativ, und der Steuerkolben 8 geht unter Erhöhung der Schliessvorspannung des Hauptventilgliedes 5 auf ihren Maximalwert aus seiner oberen Endlage O in seine untere Endlage U (siehe Fig.2). Die Erreichung der Schliessstellung des Hauptventilgliedes 5 ist nun durch den Druckausgleich p3 = p1 und durch die erhöhte Schliessvorspannung des Rückstellgliedes 6 gesichert.

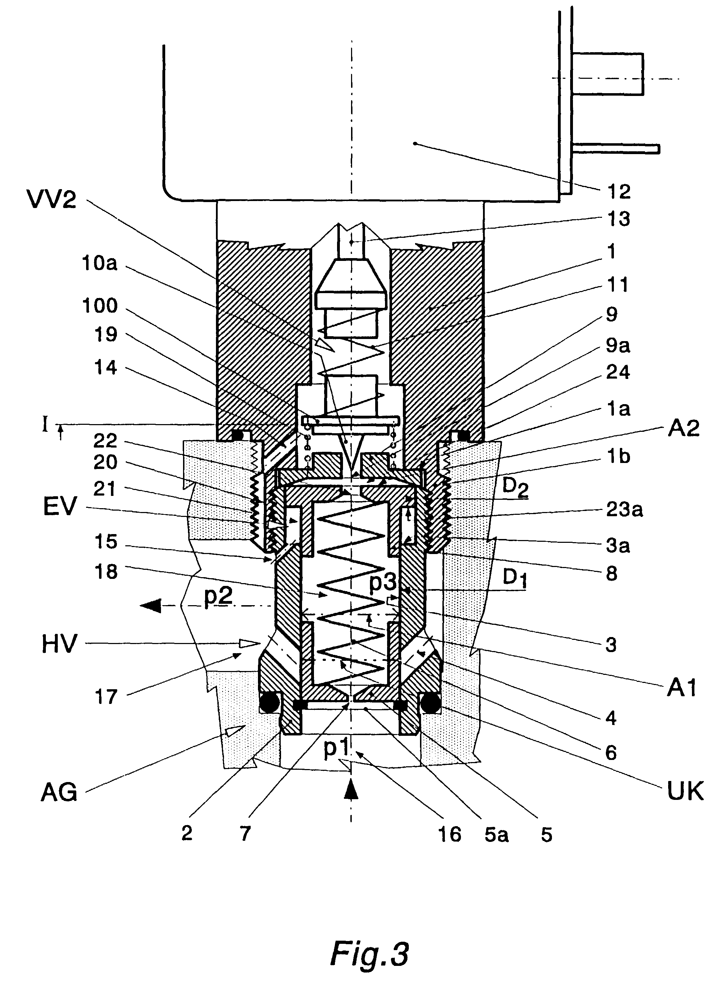

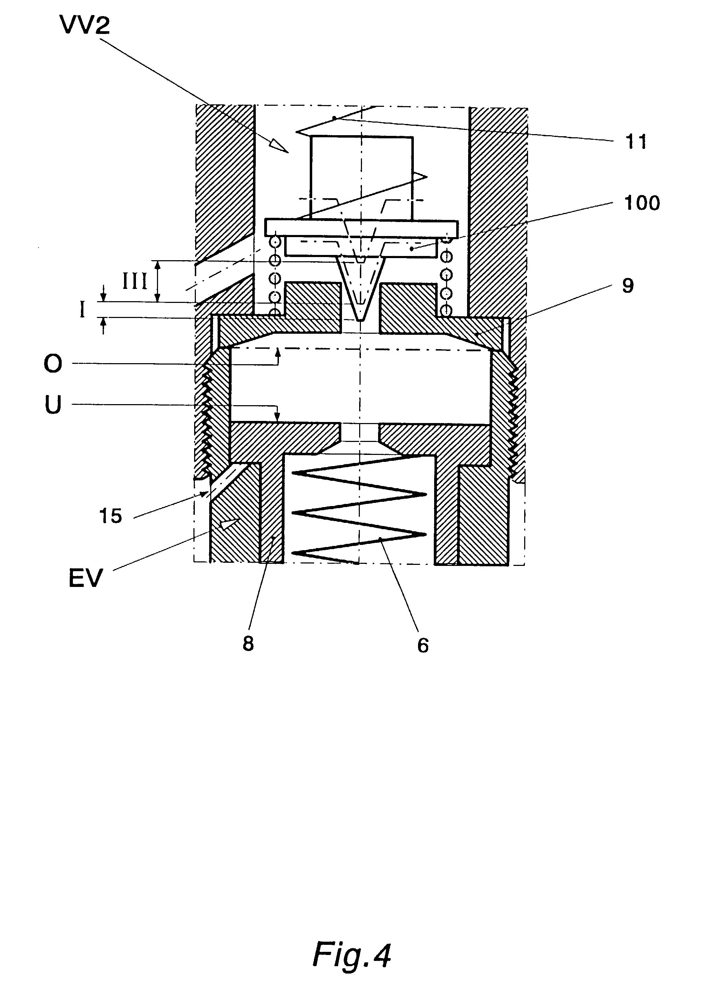

Das in den Figuren 3 und 4 dargestellte Druckentlastungs- und Druckbegrenzungsventil entspricht in seinem Aufbau weitgehend dem vorangehend erläuterten Druckentlastungsventil. Einander entsprechende Bauteile und Baugruppen sind daher mit den gleichen Bezugszeichen versehen. Abweichendes gilt nur für das Vorsteuerventil VV2, jedoch stimmt auch diesbezüglich die Funktion im Umlauf-Arbeitszustand, d.h. bei in fester Maximal-Offenstellung befindlichem Vorsteuerventil, mit dem Druckentlastungsventil VV1 vollständig überein. Die folgende Erläuterung beschränkt sich daher im wesentlichen auf die Abweichungen im Vorsteuerventil und auf die Begrenzungsregelung des Ventileingangsdrucks.

Das Vorsteuerventil VV2 ist auch hier zwischen einem ersten Betriebszustand mit aktivierter Entlastungsvorrichtung EV und einem zweiten Betriebszustand mit deaktivierter Entlastungsvorrichtung umsteuerbar ausgebildet, wobei der erste Betriebszustand einer Herabsetzung des Ventileingangsdrucks p1 auf einen niedrigen Umlaufdruckwert und der zweite Betriebszustand einer laufend wirksamen Begrenzungsregelung des Ventileingangsdrucks p1 auf einen vorgebbaren Arbeitsdruckwert zugeordnet ist. Für das Vorsteuerventil ist im Gegensatz zum vorangehend bschriebenen Druckbegrenzungsventil ein gemäss vorgebbaren Begrenzungs-Ansprechwerten des Ventil-eingangsdrucks p1 bemessenes oder vorzugsweise einstellbares Vorspannglied 11 vorgesehen. Dazu hat das Vorsteuerventil ein vom Stössel 13 des Elektromagneten 12 getrenntes Ventilglied 100, welches gegen den Stössel durch das Vorspannglied 11 abgestützt ist. Das Vorspannglied 11 hat hier die Form einer auf Bundansätzen des Stössels 13 und des Ventigliedes 100 zentrierten Schraubendruckfeder. Für die Einstellbarkeit des Vorspanngliedes können an sich übliche, hier nicht dargestellte Elemente und Vorrichtungen vorgesehen werden, z.B. eine Aufteilung des Stössels 13 in koaxiale Abschnitte, die mittels einer geeigneten Verschraubung oder dergl. gegeneinander axial verstellbar sind. Der Oeffnungsgrad des Vorsteuerventils im zweiten Betriebszustand ist durch den Ventileingangsdruck p1 in Bezug auf den Begrenzungs-Ansprechwert bestimmt. Dies wird im Beispiel dadurch erreicht, dass das Ventilglied 100 vom Vorspannglied 11 in Schliessrichtung und vom Steuerdruck p3 in Oeffnungsrichtung beaufschlagt ist. Im Umlaufdruck-Betriebszustand nimmt das Ventilglied wie beim Druckentlastungsventil eine maximale Offenstellung I ein.

Ausgehend von einer bestimmten, in der Schliessstellung des Vorsteuerventils wirksamen Vorspannung des Ventilgliedes bleibt das Ventil geschlossen, bis ein zunehmender, auf die Querschnittsfläche der Ventilbohrung wirkender Steuerdruck p3, der bei geschlossenem Vorsteuerventil dem Ventileingangsdruck p1 gleich ist, eine die Vorspannkraft übersteigende Hubkraft erzeugt. Der in diesem Augenblick vorhandene Wert des Ventileingangsdrucks ist der Ansprechwert, der einem Begrenzungs-Sollwert des System-Arbeitsdrucks zugeordnet werden kann. Praktische Werte in der Oelhydraulik liegen z.B. in der Grössenordnung von einigen hundert bar.

Bei weiter ansteigendem Ventileingangsdruck p1 öffnet sich das Vorsteuerventil zunehmend und begrenzt somit den Druck p3 auf den durch die Vorsteuerfeder 11 bestimmten Wert, so dass p3 die Schliesskraft der Vorsteuerfeder 11 zum Gleichgewicht kommen. Dies bedeutet, dass ein weiteres ansteigen von p1 für p3 keine Druckerhöhung zur Folge hat und somit das Hauptventilglied 5 nach oben geschoben wird und die Querbohrungen 4 soweit freigegeben werden, dass sich hier eine druckbegrenzende Gleichgewichtssituation mit VV2 einstellt.

Der Bereich des Oeffnungshubes des Ventilgliedes 100 und damit der innerhalb vorgegebener Grenzen der Arbeitsdruck-Begrenzungsregelung liegende, in Fig.4 angedeutete Bereich III der Teil-Offenstellungen des Vorsteuerventils ist daher entsprechend gering im Vergleich zu der maximalen Offenstellung I im Umlaufdruck-Betriebszustand.

In jedem Fall bleibt also am Vorsteuerventil VV2 mindestens der dem Begrenzungs-Ansprechwert entsprechende Druckabfall und damit ein entsprechend hoher Steuerdruck p3 bestehen, so dass im ganzen Regelbereich die gegenüber der Rückstellkraft überwiegende Druckkraft auf die resultierende Wirkfläche 23 den Steuerkolben 8 unter entsprechend hoher Schliessvorspannung des Hauptventils HV in seiner zum Hauptventilglied 5 hin verschobenen Lage U hält.

Je nach Anwendungsfall kann in allen Ausführungsformen für das Vorsteuerventil eine mechanische, hydraulische, pneumatische oder elektromagnetische Ansteuervorrichtung zum Umschalten zwischen Umlauf- und Arbeitsdruck vorgesehen werden.

## Patentansprüche

1. Vorgesteuertes Hydraulikventil zum Umschalten des Ventileingangsdrucks (pl) zwischen einem Arbeitsdruckwert und einem niedrigeren Umlaufdruckwert, insbesondere ausgebildet als Druckentlastungs- und Druckbegrenzungsventil, mit folgenden Merkmalen:
a) es ist ein Hauptströmungsweg mit Einlass (16) und Auslass (17), ein im Hauptströmungsweg angeordnetes Hauptventil (HV) und ein mit diesem wirkverbundenes Vorsteuerventil (VV1, VV2) vorgesehen;
b) das Hauptventil (HV) ist mit einem federelastischen Rückstellglied (6) versehen;
gekennzeichnet durch folgende Merkmale:
c) es ist eine durch das Vorsteuerventil (VV1, VV2) aktivierbare und mit dem Rückstellglied (6) wirkverbundene, die Rückstellwirkung auf das Hauptventil (HV) steuernde Entlastungsvorrichtung (EV) vorgesehen;
d) die Entlastungsvorrichtung (EV) ist unter der Wirkung des Vorsteuerventils (VV1, VV2) zwischen einer aktivierten Stellung (O) mit verminderter Wirkung des Rückstellgliedes (6) auf das Hauptventil (HV) und einer deaktivierten Stellung (U) mit erhöhter Wirkung des Rückstellgliedes auf das Hauptventil umsteuerbar ausgebildet.

2. Hydraulikventil nach einem der vorangehenden Ansprüche, dadurch gekennzeichnet, dass bei in Schliessstellung (II) befindlichem Vorsteuerventil (VV1) die Entlastungsvorrichtung (EV) deaktiviert und das Hauptventil (HV) seine Schliessstellung einnimmt.

3. Hydraulikventil nach Anspruch 1 oder 2, gekennzeichnet durch folgende Merkmale:
a) es ist ein an das Vorsteuerventil (VV1, VV2) angeschlossener Steuerdruckraum (18) mit einem darin herrschenden, durch das Vorsteuerventil (VV1, VV2) bestimmten Steuerdruck (p3) vorgesehen;
b) die Entlastungsvorrichtung (EV) weist einen Steuerkolben (8) auf, dessen Wirkfläche (23) mit dem Steuerdruckraum (18) verbunden ist;
c) als Hauptventil-Rückstellglied (6) ist ein einerseits mit dem Steuerkolben (8) der Entlastungsvorrichtung (EV) und andererseits mit einem Hauptventilglied (5) wirkverbundenes Federelement vorgesehen;
d) die Wirkfläche (23) des Steuerkolbens (8) ist vom Steuerdruck (p3) in einer zur Wirkung des Rückstellgliedes (6) auf das Hauptventilglied (5) im wesentlichen gleichsinnigen Richtung beaufschlagt.

4. Hydraulikventil nach Anspruch 3, dadurch gekennzeichnet, dass der Steuerdruck (p3) durch eine Zuströmung vom Ventileingang (16) über eine Drossel (7) in den Steuerdruckraum (18) einerseits und eine vom Oeffnungszustand des Vorsteuerventils (VV1, VV2) abhängige Abströmung aus dem Steuerdruckraum (18) andererseits bestimmt ist.

5. Hydraulikventil nach Anspruch 3 oder 4, dadurch gekennzeichnet, dass der Steuerkolben (8) als Differentialkolben mit durch Abschnitte unterschiedlichen Durchmessers (D1, D2) bestimmter Wirkfläche (23) ausgebildet ist und dass die Rückseite (23a) dieser Wirkfläche in einem Entlastungsraum (21) liegt.

6. Hydraulikventil nach einem der Ansprüche 3 bis 5, gekennzeichnet durch folgende Merkmale:
a) das Hauptventil (HV) umfasst ein in einer Stufenbohrung (3) eines Ventilkörpers (1) angeordnetes, vorzugsweise kolbenförmiges Hauptventilglied (5) mit einer Bypassdrossel (7) und einem vorzugsweise als Druckfeder ausgebildeten Rückstellglied (6), welches das Hauptventilglied (5) in Richtung auf eine Schliessstellung vorspannt;
b) die Entlastungsvorrichtung (EV) umfasst einen Steuerkolben (8), der als Differentialkolben ausgebildet und und eine durch Abschnitte unterschiedlichen Durchmessers (D1, D2) gebildete Wirkfläche (23) sowie einen Durchlass (22) zum Vorsteuerventil aufweist.

7. Hydraulikventil nach Anspruch 6, dadurch gekennzeichnet, dass an der Rückseite der Steuerkolben-Wirkfläche (23) ein mit der Ventilausgangsseite (17) verbundener Entlastungsraum (21) gebildet ist.

8. Hydraulikventil nach Anspruch 7, dadurch gekennzeichnet, dass der Steuerkolben (8) in einer Stufenbohrung (3) angeordnet ist und dass der Entlastungsraum (21) durch die ese Stufenbohrung und den Steuerkolben gebildet ist.

9. Hydraulikventil, ausgebildet als Entlastungsventil, nach einem der vorangehenden Ansprüche, dadurch gekennzeichnet, dass das Vorsteuerventil (VV1) zwischen einer dem Umlaufdruck-Betriebszustand zugeordneten ersten Stellung (I), vorzugsweise einer festen Offenstellung, mit aktivierter Entlastungsvorrichtung (EV) und einer dem Arbeitsdruck-Betriebszustand zugeordneten zweiten Stellung (II), vorzugsweise einer festen Schliessstellung, mit deaktivierter Entlastungsvorrichtung umsteuerbar ist.

10. Hydraulikventil nach den Ansprüchen 3 und 9, gekennzeichnet durch folgende Merkmale:
a) das vorzugsweise als Druckfeder ausgebldete Hauptventil-Rückstellglied (6) stützt sich zwischen Hauptventilglied (5) und Steuerkolben (8) ab;
b) bei in einer Offenstellung (I) befindlichem Vorsteuerventil (VV1) steht der Steuerkolben (8) bei entlasteter Wirkfläche (23) unter einseitiger Wirkung des Hauptventil-Rückstellgliedes (6) und wird dadurch in einer vom Hauptventilglied (5) weg verschobenen Lage (O) gehalten, womit eine verminderte Vorspannung des Hauptventil-Rückstellgliedes (6) und damit ein niedriger Umlaufdruck gegeben ist;
c) bei in Schliessstellung (II) befindlichem Vorsteuerventil (VV1) hat der Steuerdruck (p3) bei nur noch mit dem Ventileingang (16) verbundenem Steuerdruckraum (18) den Wert des Ventileingangsdrucks (p1), so dass die gegenüber der Rückstellkraft überwiegende Druckkraft auf die Wirkfläche (23) den Steuerkolben (8) unter entsprechend erhöhter Vorspannung des Hauptventil-Rückstellgliedes (6) in einer zum Hauptventilglied hin verschobenen Lage hält.

11. Hydraulikventil, ausgebildet als Druckentlastungs- und Druckbegrenzungsventil, nach einem der Ansprüche 1 bis 8, gekennzeichnet durch folgende Merkmale:
a) das Vorsteuerventil (VV2) ist zwischen einem ersten Betriebszustand mit aktivierter Entlastungsvorrichtung (EV) und einem zweiten Betriebszustand mit deaktivierter Entlastungsvorrichtung umsteuerbar ausgebildet;
b) der erste Betriebszustand ist einer Herabsetzung des Ventileingangsdrucks (pl) auf einen niedrigen Umlaufdruckwert und der zweite Betriebszustand einerlaufend wirksamen Begrenzungsregelung des Ventil-eingangsdrucks (pl) auf einen vorgebbaren Arbeitsdruckwert zugeordnet;
c) für das Vorsteuerventil (VV2) ist ein gemäss vorgebbaren Begrenzungs-Ansprechwerten des Ventil-eingangsdrucks (pl) bemessenes oder einstellbares Vorspannglied (11) vorgesehen;
d) im zweiten Betriebszustand ist der Oeffnungsgrad des Vorsteuerventils (VV2) durch den Ventileingangsdruck (pl) in Bezug auf den Begrenzungs-Ansprechwert bestimmt.

12. Hydraulikventil nach Anspruch 11, dadurch gekennzeichnet, dass das Vorsteuerventil (VV2) ein Ventilglied (100) aufweist, das von einem Vorspannglied (11) in Schliessrichtung und vom Steuerdruck (p3) in Oeffnungsrichtung beaufschlagt ist und das im Umlaufdruck-Betriebszustand eine insbesondere feste Offenstellung (I) einnimmt.

13. Hydraulikventil nach den Ansprüchen 3 und 12,
gekennzeichnet durch folgende Merkmale:
a) das vorzugsweise als Druckfeder ausgebildete Hauptventil-Rückstellglied (6) stützt sich zwischen Hauptventilglied (5) und Steuerkolben (8) ab;
b) bei in einer Offenstellung (I) befindlichem Vorsteuerventil (VV2) steht der Steuerkolben (8) bei entlasteter Wirkfläche (23) unter einseitiger Wirkung des Hauptventil-Rückstellgliedes (6) und wird dadurch in einer vom Hauptventilglied (5) weg verschobenen Lage (O) gehalten, womit eine verminderte Vorspannung des Hauptventil-Rückstellgliedes (6) und damit ein niedriger Umlaufdruck gegeben ist;
c) bei einem innerhalb vorgegebener Grenzen der Arbeitsdruck-Begrenzungsregelung liegenden Bereich (III) von Teil-Offenstellung des Vorsteuerventils (VV2) bleibt am Vorsteuerventil (VV2) der zum Offenhalten des Vorsteuer-Ventilgliedes (100) erforderliche, mindestens dem Begrenzungs-Ansprechwert entsprechende Druckabfall und damit ein entsprechend hoher Steuerdruck (p3) bestehen, so dass die gegenüber der Rückstellkraft überwiegende Druckkraft auf die resultierende Wirkfläche (23) den Steuerkolben (8) unter entsprechender hoher Schliessvorspannung des Hauptventils (HV) in einer zum Hauptventilglied (5) hin verschobenen Lage (U) hält.

14. Hydraulikventil nach einem der vorangehenden Ansprüche, dadurch gekennzeichnet, dass für das Vorsteuerventil (VV1, VV2) eine mechanische, hydraulische, pneumatische oder elektromagnetische Ansteuervorrichtung (12) zum Umschalten zwischen Umlauf- und Arbeitsdruck vorgesehen ist.

## Claims

1. A pilot-operated hydraulic valve for switching the valve input pressure (pl) between an operating pressure value and a lower circulation pressure value, in particular designed as a pressure relief and pressure limiting valve, with the following features:
a) there is provided a main flow path with an intake (16) and an outlet (17), a main valve (HV) disposed in the main flow path, and a pilot valve (VV1, VV2), which is operatively connected to the main valve;
b) the main valve (HV) includes a spring-elastic resetting member (6);
characterized by the following features:
c) there is provided a relief device (EV) which is actuable by the pilot valve (VV1, VV2) and operatively connected to the resetting member (6) so as to control the resetting of the main valve (HV);
d) the relief device (EV) is designed so as to be actuable in response to the operation of the pilot valve (VV1, VV2) between an activated position (O) in which the effect exerted by the resetting member (6) on the main valve (HV) is reduced, and a deactivated position (U) in which the effect exerted by the resetting member on the main valve is increased.

2. A hydraulic valve according to the preceding claim, characterized in that with the said pilot valve (VV1) being in its closed position (II) said relief device (EV) is in its deactivated position and said main valve (HV) is in its closed position.

3. A hydraulic valve according to claim 1 or 2, characterized by the following features:
a) there is provided a control pressure chamber (18) connected to the pilot valve (VV1, VV2), the control pressure (p3) prevailing in said chamber being determined by the pilot valve (VV1, VV2);
b) the relief device (EV) includes a control piston (8), the effective surface (23) whereof is connected with said control pressure chamber (18);
c) as a resetting member (6) for the main valve there is provided a spring element which is operatively connected on one side with the control piston (8) of the relief device (EV) and on the other side with a main valve member (5);
d) the effective surface (23) of said control piston (8) is acted upon by said control pressure (p3) in a direction which is substantially the same direction in which the resetting member (6) acts on said main valve member (5).

4. A hydraulic valve according to claim 3, characterized in that the control pressure (p3) is determined on one side by a feed flow from the valve intake (16) via a throttle (7) into said control pressure chamber (18), and on the other side by a discharge flow from said control pressure chamber (18), which discharge flow depends on the opening condition of the pilot valve (VV1, VV2).

5. A hydraulic valve according to claim 3 or 4, characterized in that the control piston (8) is designed as a differential piston, the effective surface (23) whereof is determined by sections having different diameters (D1, D2), and in that the rear side (23a) of said effective surface is situated in a relief chamber (21).

6. A hydraulic valve according to anyone of claims 3 to 5, characterized by the following features:
a) the main valve (HV) comprises a preferably piston-shaped main valve member (5) which is situated in a stepped bore (3) of a valve body (1) and has a bypass throttle (7) as well as a resetting member (6) preferably designed as a pressure spring, which resetting member biases the main valve member in a direction towards a closed position;
b) the relief device (EV) comprises a control piston (8) designed as a differential piston and having an effective surface (23) formed by sections of different diameters (D1, D2) as well as a passage (22) towards the pilot valve.

7. A hydraulic valve according to claim 6, characterized in that a relief chamber (21) connected with the valve outlet (17) is formed on the rear side of the effective surface (23) of the control piston.

8. A hydraulic valve according to claim 7, characterized in that the control piston (8) is arrangd in a stepped bore (3), and in that the relief chamber (21) is defined by this stepped bore and said control piston.

9. A hydraulic valve, designed as a relief valve, according to anyone of the preceding claims, characterized in that the pilot valve (VV1) is capable of being switched over between a first position (I), preferable a fixed open position, assigned to the circulation-pressure condition with the relief device (EV) being activated, and a second position (II), preferable a fixed closed position, assigned to the operation-pressure condition with the relief device being deactivated.

10. A hydraulic valve according to the claims 3 and 9, characterized by the following features:
a) the main valve resetting member (6), preferably designed as a pressure spring, is supported between the main valve member (5) and the control piston (8);
b) with the pilot valve (VV1) being in an open position (I), the control piston (8), with its effective surface (23) being relieved of pressure, stands under a one-sided action by the main valve resetting member (6) and, thereby, is held in a position (0) displaced away from said main valve member (5), whereby a reduced bias tension of the main valve resetting member (6) and thus a low circulation pressure is accomplished;
c) with the pilot valve (VV1) being in a closed position (II) and with the control pressure chamber (18) being connected only with the valve intake (16), the control pressure (p3) has assumed the value of valve intake pressure (p1), such that the pressing force on the effective surface (23), which exceeds the resetting force, holds the control piston (8) in a position displaced towards the main valve member, while the main valve resetting member (6) is under increased bias tension.

11. A hydraulic valve, designed as a pressure relief and pressure limiting valve, according to anyone of claims 1 to 8, characterized by the following features:
a) the pilot valve (VV2) is designed so as to be capable of being switched over between a first operational condition with the relief device (EV) being activated and a second operational condition with the relief device being deactivated;
b) said first operational condition is assigned to a reduction of the valve intake pressure (p1) to a low circulation pressure value, and said second operational condition is assigned to a currently effective regulation limiting the valve intake pressure (p1) to a predeterminable operational pressure value;
c) for said pilot valve (VV2) there is provided a bias tensioning member (11) which is dimensioned or capable of being adjusted in accordance with predeterminable limiting response values of said valve intake pressure (p1);
d) in said second operational condition, the degree to which said pilot valve (VV2) opens is determined by the valve intake pressure (p1) in relation to said limiting response value.

12. A hydraulic valve according to claim 11, characterized in that said pilot valve (VV2) has a valve member (100) which is pressurized by said bias tensioning member (11) in the direction of closing and by the control pressure (p3) in the direction of opening, and which in the circulation-pressure operational condition takes an open position (I), which in particular is a fixed one.

13. A hydraulic valve according to the claims 3 and 12, characterized by the following features:
a) the main valve resetting member (6), preferably designed as a pressure spring, is supported between the main valve member (5) and the control piston (8);
b) with the pilot valve (VV2) being in an open position (I), the control piston (8), with its effective surface (23) being relieved of pressure, stands under a one-sided action by the main valve resetting member (6) and, thereby, is held in a position (0) displaced away from said main valve member (5), whereby a reduced bias of the main valve resetting member (6) and a low circulation pressure is accomplished;
c) for a range (III) of partially open positions of said pilot valve (VV2), which range is enclosed within predetermined limits, the pressure drop necessary for keeping the pilot valve member (100) open, at least a pressure drop equal to said limiting response value, remains along said pilot valve (VV2), thereby maintaining a correspondingly high control pressure (p3), so that the pressure force which acts on the resultant effective surface (23) and which is greater than the resetting force, holds the control piston (8) in a position (U) displaced towards the main valve member (5) with a correspondingly high closing bias tension of the main valve (HV).

14. A hydraulic valve according to anyone of the preceding claims, characterized in that a mechanical, hydraulic, pneumatic or elctromagnetic control device (12) is provided at the pilot valve (VV1, VV2) for switching over between circulation and operation pressure.

## Revendications

1. Vanne hydraulique servocommandée pour commuter la pression d'entrée de vanne (p1) entre une valeur de pression de travail et une valeur de pression de circulation plus basse, réalisée notamment sous forme de vanne de décharge de pression et de limitation de pression, avec les caractéristiques suivantes :
(a) il est prévu un trajet d'écoulement principal avec une entrée (16) et une sortie (17), une vanne principale (HV) disposée dans le trajet d'écoulement principal et une vanne servocommandée (VV1, VV2) fonctionnellement reliée à celle-ci ;
b) la vanne principale (HV) est pourvue d'un organe de rappel (6) ayant une élasticité de ressort ;
caractérisée par les caractéristiques suivantes :
c) il est prévu un dispositif de décharge (EV) pouvant être activé par la vanne servocommandée (VV1, VV2) et relié fonctionnellement à l'organe de rappel (6), commandant l'effet de rappel sur la vanne principale (HV) ;
d) le dispositif de décharge (EV) est réalisé pour pouvoir être commuté, sous l'action de la vanne servocommandée (VV1, VV2) entre une position activée (O) avec un effet diminué de l'organe de rappel (6) sur la vanne principale (HV) et une position désactivée (U) avec un effet augmenté de l'organe de rappel sur la vanne principale.

2. Vanne hydraulique selon la revendication précédente, caractérisée en ce que, lorsque la vanne servocommandée (VV1) se trouve en position de fermeture (II), le dispositif de décharge (EV) est désactivé et la vanne principale (HV) occupe sa position de fermeture.

3. Vanne hydraulique selon la revendication 1 ou 2, caractérisée par les caractéristiques suivantes :
a) il est prévu une chambre de pression de commande (18) raccordée à la vanne servocommandée (VV1, VV2) avec une pression de commande (p3) régnant dans celle-ci, déterminée par la vanne servocommandée (VV1, VV2);
b) le dispositif de décharge (EV) présente un piston de commande (8) dont la surface active (23) est reliée à la chambre de pression de commande (18) ;
c) comme organe de rappel (6) de la vanne principale, il est prévu un élément de ressort fonctionnellement relié d'une part au piston de commande (8) du dispositif de décharge (EV) et, d'autre part, à un organe de vanne principale (5) ;
d) la surface active (23) du piston de commande (8) est sollicitée par la pression de commande (p3) dans une direction sensiblement dans le même sens, en vue de l'effet de l'organe de rappel (6) sur l'organe de vanne principal (5).

4. Vanne hydraulique selon la revendication 3, caractérisée en ce que la pression de commande (p3) est déterminée par un flux affluent depuis l'entrée de vanne (16) par un papillon (7) dans la chambre de pression de commande (18), d'une part, et un flux effluent dépendant de l'état d'ouverture de la vanne servocommandée (VV1, VV2) de la chambre de pression de commande (18), d'autre part.

5. Vanne hydraulique selon la revendication 3 ou 4, caractérisée en ce que le piston de commande (8) est réalisé sous forme de piston différentiel avec une surface active (23) définie par des tronçons d'un diamètre différent (D1, D2) et en ce que le côté arrière (23a) de cette surface active se situe dans une chambre de décharge (21).

6. Vanne hydraulique selon l'une des revendications 3 à 5, caractérisée par les caractéristiques suivantes :
a) la vanne principale (HV) comporte un organe de vanne principal (5) de préférence en forme de piston, disposé dans un alésage étagé (3) d'un corps de vanne (1), avec un papillon de dérivation (7) et un organe de rappel (6) réalisé de préférence comme ressort de pression qui précontraint l'organe de vanne principale (5) en direction d'une position de fermeture ;
b) le dispositif de décharge (EV) comprend un piston de commande (8) qui est réalisé sous forme de piston différentiel et qui présente une face active (23) formée par des tronçons d'un diamètre différent (D1, D2) ainsi qu'un passage (22) vers la vanne servocommandée.

7. Vanne hydraulique selon la revendication 6, caractérisée en ce qu'il est formé au côté arrière de la face active (23) du piston de commande une chambre de décharge (21) reliée au côté sortie de vanne (17).

8. Vanne hydraulique selon la revendication 7, caractérisée en ce que le piston de commande (8) est disposé dans un alésage étagé (3) et que la chambre de décharge (21) est réalisée par cet alésage étagé et le piston de commande.

9. Vanne hydraulique, réalisée sous forme de vanne de décharge, selon l'une des revendications précédentes, caractérisée en ce que la vanne servocommandée (VV1) peut être commutée entre une première position (I) associée à l'état de fonctionnement de la pression de circulation, de préférence une position ouverte fixe, avec dispositif de décharge activé (EV) et une deuxième position (II) associée à l'état de fonctionnement de pression de travail, de préférence une position de fermeture fixe, avec dispositif de décharge désactivé.

10. Vanne hydraulique selon les revendications 3 et 9, caractérisée par les caractéristiques suivantes :
a) l'organe de rappel de vanne principale (6) réalisée de préférence sous forme de ressort de pression prend appui entre l'organe de vanne principal (5) et le piston de commande (8) ;
b) lorsque la vanne servocommandée (VV1) se trouve en position ouverte (I), le piston de commande (8), lorsque la face active est déchargée (23), est soumis à l'action unilatérale de l'organe de rappel de vanne principale (6) et est maintenu de ce fait dans une position (O) déplacée au loin de l'organe de vanne principale (5) d'où résulte une précontrainte diminuée de l'organe de rappel de vanne principale (6) et par conséquent une pression de circulation basse ;
c) lorsque la vanne servocommandée (VV1) se trouve en position fermée (II), la pression de commande (p3) dans la chambre de pression de commande (18) reliée seulement encore avec l'entrée de vanne (16) a la valeur de la pression d'entrée de vanne (p1) de telle sorte que la force de pression qui prédomine par rapport à la force de rappel sur la face active (23) maintient le piston de commande (8) sous une précontrainte augmentée de manière correspondante de l'organe de rappel de vanne principale (6) dans une position décalée vers l'organe de vanne principale.

11. Vanne hydraulique, réalisée sous forme de vanne de décharge de pression et de limitation de pression, selon l'une des revendications 1 à 8, caractérisée par les caractéristiques suivantes :
a) la vanne servocommandée (VV2) est réalisée pour être commutée entre un premier état de fonctionnement avec dispositif de décharge activé (EV) et un deuxième état de fonctionnement avec dispositif de décharge désactivé ;
b) le premier état de fonctionnement est associé à une diminution de la pression d'entrée de vanne (p1) à une valeur de pression de circulation basse et le deuxième état de fonctionnement à un réglage de limitation continuellement actif de la pression d'entrée de vanne (p1) à une valeur de pression de travail prédéfinissable ;
c) pour la vanne servocommandée (VV2) il est prévu un organe de précontrainte (11) réglable ou dimensionné selon des valeurs de réponse de limitation prédéfinissables de la pression d'entrée de vanne (p1);
d) dans le deuxième état de fonctionnement, le degré d'ouverture de la vanne servocommandée (VV2) est déterminé par la pression d'entrée de vanne (p1) relativement à la valeur de réponse de limitation.

12. Vanne hydraulique selon la revendication 11, caractérisée en ce que la vanne servocommandée (VV2) présente un organe de vanne (100) qui est sollicité par un organe de précontrainte (11) dans la direction de la fermeture et par la pression de commande (p3) dans la direction de l'ouverture et qui occupe à l'état de fonctionnement sous pression de circulation une position d'ouverture particulièrement fixe (I).

13. Vanne hydraulique selon les revendications 3 et 12, caractérisée par les caractéristiques suivantes :
a) l'organe de rappel de vanne principale (6) réalisée de préférence sous forme de ressort de pression prend appui entre l'organe de vanne principale (5) et le piston de commande (8) ;
b) lorsque la vanne servocommandée (VV2) se trouve en une position ouverte (I), le piston de commande (8), avec face active déchargée (23), est soumis à l'action unilatérale de l'organe de rappel de vanne principale (6) et est maintenu de ce fait dans une position (0) déplacée au loin de l'organe de vanne principale (5) d'où résulte une précontrainte diminuée de l'organe de rappel de vanne principale (6) et par conséquent une pression de circulation basse ;
c) dans une zone (III), située à l'intérieur de limites prédéterminées du réglage de limitation de la pression de travail, d'une position d'ouverture partielle de la vanne servocommandée (VV2), il subsiste à la vanne servocommandée (VV2) la chute de pression nécessaire pour maintenir ouvert l'organe de vanne servocommandé (100), correspondant au moins à la valeur de réponse de limitation et par conséquent une pression de commande (p3) élevée d'une manière correspondante de telle sorte que la force de pression qui prédomine par rapport à la force de rappel sur la face active (23) qui en résulte maintient le piston de commande (8) sous une précontrainte de fermeture élevée d'une manière correspondante de la vanne principale (HV) dans une position U décalée vers l'organe de vanne principale (5).

14. Vanne hydraulique selon l'une des revendications précédentes, caractérisée en ce qu'il est prévu pour la vanne servocommandée (VV1, VV2) un dispositif de commande mécanique, hydraulique, pneumatique ou électromagnétique (12) pour commuter entre les pressions de circulation et de travail.
